(19) Europäisches Patentamt

European Patent Office

Office européen des brevets

(11) Veröffentlichungsnummer: **0 491 228 A2**

# (12) EUROPÄISCHE PATENTANMELDUNG

(21) Anmeldenummer: **91120771.0**

(22) Anmeldetag: **03.12.91**

(51) Int. Cl.⁵: **H04B 10/16**, H04B 10/20

(30) Priorität: **19.12.90 DE 4040719**

(43) Veröffentlichungstag der Anmeldung:
**24.06.92 Patentblatt 92/26**

(84) Benannte Vertragsstaaten:
**DE FR GB IT**

(71) Anmelder: **Bosch-Siemens Hausgeräte GmbH Patent- und Vertragswesen Hochstrasse 17 Postfach 10 02 50 W-8000 München 80(DE)**

(72) Erfinder: **Striek, Ralf-Jürgen, Dipl.-Ing. Mäckeritzstrasse 22 W-1000 Berlin 13(DE)**

(54) **Bidirektionales optisches Datenübertragungssystem.**

㊙ Die Erfindung betrifft ein bidirektionales optisches Übertragungssystem mit an einem Datenbus (1) über optische Verzweigungen (5,7) in Reihe angeschlossenen Stationseinrichtungen (3), mit jeweils einer Empfangs- und einer Sendeeinheit (19,21). Erfindungsgemäß wird in mindestens einer Sendeeinheit (21) einer Stationseinrichtung (3) ein über die zugeordnete Empfangseinrichtung (19) empfangenes Signal verstärkt. Durch Rückführung derart verstärkter Signale können sich in den Verzweigungen (5,7) durch Aufteilen von Signalen ergebende Leistungsabnahmen ausgeglichen werden. In einfacher Weise können somit die Reichweite eines optischen Datenübertragungssystems wie auch die Anzahl angeschlossener Stationseinrichtungen erhöht werden.

Fig.1

Die Erfindung bezieht sich auf ein bidirektionales optisches Datenübertragungssystem für digitale optische Signale mit einem einen Lichtwellenleiter aufweisenden Datenbus für in Reihe angeordnete Stationseinrichtungen, mit jeweils einer Empfangs- und einer Sendeeinheit, von denen jede über eine optische Verzweigung mit dem Datenbus verbunden ist, wobei jede Verzweigung zwei Verzweigungsleitungen aufweist, die an ihrem dem Datenbus entfernten Enden zu einer Verbindungsleitung zusammengeführt sind, die an ihrem der Verzeigung abgewandten Ende in jeweils eine Anschlußleitung für die Empfangs- und die Sendeeinheit aufgeteilt ist, und eine Durchgangsleitung zur direkten Verbindung von sich jeweils an eine Verzweigung anschließenden Abschnitten des Datenbuses.

Derartige bidirektionale optische Datenübertragungssysteme werden zur Datenübertragung, und dabei beispielsweise zur Steuerung oder Zustandsüberwachung, zwischen elektrischen Geräten und einer Steuereinheit eingesetzt. Im Bereich der Haustechnik ist über ein derartiges Datenübertragungssystem eine Steuerung und Überwachung beispielsweise von elektrischen Hausgeraten, Geräten der Unterhaltungselektronik und von Alarmanlagen möglich.
Dabei erfolgt bei einem bidirektionalen Datenübertragungssystem eine Übertragung von Signalen mit unterschiedlichem Richtungssinn in einem einzigen Leiter.

Der Einsatz optischer Datenübertragungssysteme mit Lichtwellenleitern aus Kunsstoffasern hat im Gegensatz zu elektrischen Kabelverbindungen, beispielsweise über Koaxialkabel, den Vorteil, daß die Störsicherheit erhöht ist, daß galvanische Kopplungen auch für mehrere an 220 V angeschlossene Geräte unproblematisch sind und daß bei einfachem und kostengünstigem Aufbau hohe Übertragungsgeschwindigkeiten erreichbar sind.

Neben den genannten Vorteilen optischer Datenübertragungssysteme besteht ein Nachteil betreffend ihren Einsatz darin, daß bei einer Vielzahl angeschlossener Stationseinrichtungen und damit einer Vielzahl von Verzweigungen von dem Datenbus die Reichweiten für die Datenübertragung erheblich herabgesetzt werden. Der Grund hierfür liegt darin, daß unabhängig von den geringen übertragungsverlusten in den Leitungen bzw. Lichtwellenleitern selbst, in jeder optischen Verzweigung eine Aufteilung der zur Verfügung stehenden optischen Leistung eines in die Verzweigung gelangenen Signales erfolgt; dabei kommt es bei einer gleichmäßigen Aufteilung der Energie eines sich verzweigenden Signales zu einer Halbierung der Energie.

Der Erfindung liegt die Aufgabe zugrunde, ein gattungsgemäßes bidirektionales optisches Datenübertragungssystem so weiterzubilden, daß in einfacher und sicherer Weise die Reichweite bzw. die Anzahl der an den Datenbus angeschlossenen Stationseinheiten erhöht werden kann.

Diese Aufgabe ist erfindungsgemäß bei einem gattungsgemäßen Datenübertragungssystem dadurch gelöst, daß in mindestens einer Stationseinrichtung ein über die Empfangsheit empfangenes Signal über die Sendeeinheit verstärkt und dem Datenbus zurückgeführt wird.

Durch die Verstärkung des Signals in einer das Signal empfangenden Stationseinrichtung wird in einfacher und sicherer Weise die Leistung von Signalen und damit die Reichweite der Signale erhöht. Jedes Signal verläßt nämlich die Sendeeinheit dieser Stationseinrichtung mit einer Leistung, die höher ist als diejenige des von der Empfangseinheit dieser Stationseinrichtung empfangenen Signals. Damit wird die in Verzweigungen, aus der Aufteilung des Signals resultierende, erfolgende Leistungsabnahme ausgeglichen. In einfacher und betriebssicherer Weise ist somit die Voraussetzung zum Erzielen höher Reichweiten für das Signal geschaffen und dementsprechend ist es möglich, daß die Anzahl von an einen Datenbus angeschlossenen Stationseinrichtungen erhöht wird, ohne daß die Signale zu schwach werden bzw. daß es zu übertragungsfehlern kommt.

Es ist dabei von Vorteil, daß der Datenbus und die Verbindungsleitung im wesentlichen übereinstimmende Querschnittsflächen aufweisen und/oder daß die Durchgangsleitung, die Verzweigungsleitungen und die Anschlußleitungen jeweils eine Querschnittsfläche haben, die im wesentlichen der Hälfte der Querschnittsfläche des Datenbusses entspricht. Bei einer derartigen Anpassung der Querschnitte ist es in einfacher Weise möglich, daß ein in einer Stationseinrichtung verstärktes Signal im wesentlichen mit einer Leistung dem Datenbus zurückgeführt wird, die der Leistung des in dem Datenbus übertragenen Signals, vor dessen Eintritt in die optische Verzweigung, entspricht.

Bei einer bevorzugten Ausführungsform ist jeder Stationseinrichtung eine Adresse zugeordnet und es enthält jedes Signal eine Adresse, wobei in jeder Stationseinrichtung diejenigen Signale mit einer von der Stationseinrichtung abweichenden Adresse verstärkt werden. Ein in einer Empfangseinheit aufgenommenes Signal wird dabei zunächst hinsichtlich seiner Adresse mit derjenigen der Stationseinrichtung verglichen. Stimmen die Adressen überein, dann wird das Signal in entsprechender Weise zum Überwachen oder Steuern einem der Stationseinrichtung zugeordneten elektrischen Gerät zugeführt. Wird eine fehlende übereinstimmung zwischen der Adresse des Signals und derjenigen der Stationseinrichtung festgestellt, dann wird das für den Vergleich bereits eingelesene Signal über die Sendeeinheit verstärkt und in den Datenbus zurückgeführt. Damit ergibt sich ohne großen Aufwand, bezüglich des Aufbaus wie auch des Betriebs des optischen Datenübertragungssystems, gezielt eine Verstärkung von Signalen die, um zu der zugeordneten Stationseinrichtung mit übereinstimmender Adresse gelangen zu können, weitergeleitet werden müssen.

Es hat sich weiterhin als vorteilhaft herausgestellt, daß die Pulslänge der einzelnen Informationsabschnitte eines Signals gegenüber den Schaltzeiten der Empfangs- und Sendeeinheiten und den Laufzeiten in der optischen Verzweigung, der Verbindungsleitung und der Anschlußleitungen groß ist, so daß durch die Rückführung eines verstärkten Signals der Informationsgehalt des Signals im wesentlichen nicht verändert wird. Durch eine derartige Anpassung wird in einfacher Weise sichergestellt, daß durch die Verstärkung eines Signals weder dessen Adresse noch dessen Informationsgehalt verändert wird.

Ein Ausführungsbeispiel betreffend ein erfindungsgemäßes bidirektionales optisches Datenübertragungssystem wird anhand der Zeichnung erläutert. Es zeigen;
Figur 1 eine schematische Darstellung eines erfindungsgemäßen bidirektionalen optischen übertragungssystems und
Figur 2 ein Zeitdiagramm für einen Signalabschnitt.

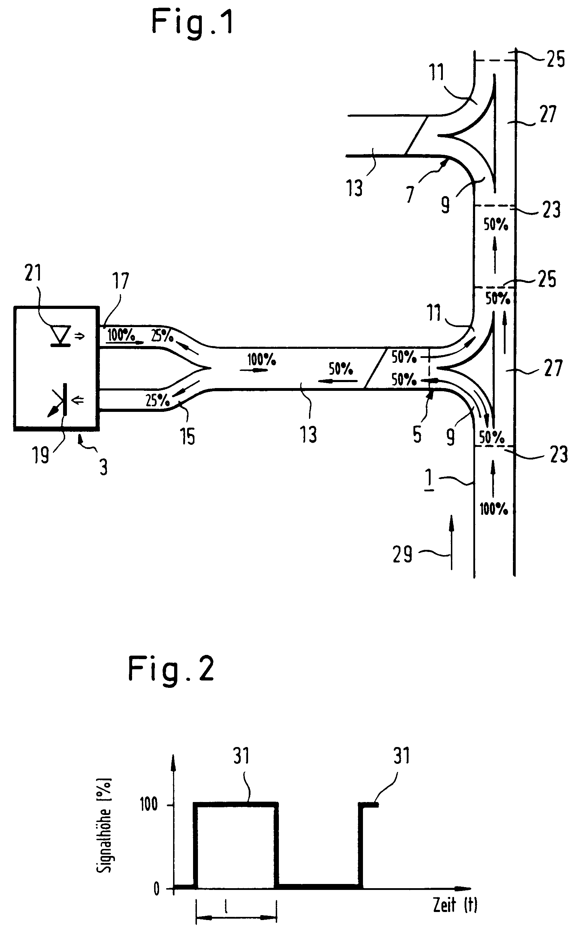

Bei dem in Figur 1 dargestellten bidirektionalen optischen Datenübertragungssystem können Signale über einen Lichtwellenleiter eines Datenbusses 1 zu einer nicht näher dargestellten Stationseinrichtung 3 zugeführt oder, in umgekehrter Richtung, von dieser weitergeleitet werden. Die Stationseinrichtung 3 ist mit dem Datenbus 1 über eine insgesamt mit 5 bezeichnete optische Verzweigung verbunden. An dem Datenbus 1 ist eine Vielzahl von Stationseinrichtungen in Reihe geschaltet, von denen vorliegend lediglich die genannte Stationseinrichtung 3 dargestellt ist; betreffend eine weitere Stationseinrichtung ist eine weitere optische Verzweigung 7 angedeutet.

Die optischen Verzweigungen 5,7 sind jeweils im wesentlichen gleich aufgebaut und stehen mit dem Datenbus über zwei Verzweigungsleitungen 9,11 in Verbindung. Die beiden Verzweigungleitungen 9,11 werden an ihrem dem Datenbus 1 entfernt gelegenen Enden zu einer Verbindungsleitung 13 zusammengeführt. Diese ist an ihrem dem Datenbus 1 entfernten bzw. der Stationseinrichtung 3 benachbarten Ende in zwei Anschlußleitungen 15,17 aufgeteilt. In im wesentlichen gleicher Weise sind innerhalb jeder Stationseinrichtung 3 eine Empfangseinheit 19 und eine Sendeeinheit 21 angeordnet, die mit der Anschlußleitung 15 bzw. mit der Anschlußleitung 17 verbunden sind.

Zwischen den jeweils einer optischen Verzweigung 5,7 benachbarten Abschnitten 23, 25 des Datenbuses 1 verläuft eine, jeweils der Verzweigung 5,7 zugehörige, Durchgangsleitung 27 für eine direkte Verbindung innerhalb des Datenbuses 1 im Bereich einer optischen Verzweigung 5,7.

Ein in Richtung des Pfeiles 29 in Figur 1 übertragenes Signal kann aus einer Reihe entsprechend kodierter, im wesentlichen rechteckförmiger Pulse 31 bestehen (Fig. 2); es wird jeweils im Anschluß an den Abschnitt 23 in einer Verzweigung 3, 7 in Bezug auf seine Leistung aufgeteilt. Vorliegend gelangt, wie in Fig. 1 durch prozentuale Angaben betreffend die Signalleistung angegeben, ein Signal mit halber Leistung über die Verzweigungsleitung 9 in die Verbindungsleitung 13. Beim Eintritt in die Anschlußleitung 15 wird es wiederum betreffend seine Leistung, vorliegend hälftig, aufgeteilt. In Bezug auf die Ausgangsleistung des Signals kommt somit ein Signal mit einem Viertel der Ausgangsleistung in die Anschlußleitung 15, und über diese zu der Empfangseinheit 19 der Stationseinrichtung 3. Ein anderer Teil des Signals gelangt mit, gegenüber dem Ausgangssignal vor dem Eintritt in die Verzweigung 5, halber Leistung über die Durchgangsleitung 27 zu dem anderer der Verzweigung 5 benachbarten Abschnitt 25 des Datenbuses 1.

Für die genannte, und die in Fig. 1 angegebene, Aufteilung der Signalleistung ist vorausgesetzt, daß die Querschnitte der die Verzweigungsleitungen 9,11 und die Anschlußleitungen 15,17 bildenden Lichtwellenleiter halb so groß sind wie diejenigen der Lichtwellenleiter für den Datenbus 1 und die Verbindungsleitung 13, die übereinstimmende Querschnittsflächen aufweisen. Bei geänderten Relationen betreffend diese Querschnitte ergibt sich in entsprechender Weise ein anderes Verhältnis für die Leistungsanteile sich verzweigender Signale. Die Leistungsanteile eines in Richtung des Pfeiles 29 übertragenen Signals, von dem einerseits ein Anteil durch die Verzweigungsleitung 9 der Stationseinrichtung 3 zugeführt wird und von dem andererseits ein Anteil über die Durchgangsleitung 27 innerhalb des Datenbuses 1 direkt weiter übertragen wird, stimmen innerhalb des Datenbuses 1 direkt weiter übertragen wird, stimmen somit im wesentlichen überein. Eine weitere Aufteilung in zwei Signale mit gleichem, entsprechend verminderten, Leistungsanteil erfolgt beim Übergang der Verbindungsleitung 13 in die Anschlußleitungen 15,17 für die Empfangseinheit 19 bzw. die Sendeeinheit 21.

Erfindungsgemäß kann das der Empfangseinheit 19 zugeführte Signal, dessen Leistung unter den genannten Querschnittsverhältnissen für die Lichtwellenleiter, ein Viertel der Signalleistung des Signals vor dem Eintritt in die optische Verzweigung 5 beträgt, auf eine Signalleistung von beispielsweise 100 % verstärkt werden. Ein derart verstärktes Signal, dessen Leistung mit derjenigen des Signals vor dem Eintritt in die optische Verzweigung 5 übereinstimmt, wird an dem den Datenbus 1 benachbarten Ende der Verbindungsleitung 13 in zwei Signale gleicher Energie unterteilt, die jeweils über eine der Verzweigungsleitungen 9,11 in den Datenbus 1 zurückgeführt werden. Für das in Richtung des Pfeiles 29 übertragene Signal ergibt sich in dem der optischen Verzweigung 5 benachbarten, in übertragungsrichtung 29 gelegenen Abschnitt 25 eine überlagerung mit dem über die Durchgangsleitung 27 direkt übertragenen Signalanteil. Dies hat zur Folge, daß in dem sich an die optische Verzweigung 5 anschließenden Teil des Datenbuses 1 wiederum ein auf eine Ausgangsleistung von 100 % verstärktes Signal weitergeleitet wird. Durch eine derartige Verstärkung hat somit ein Signal in einem einer Verzweigung 5,7 folgenden Abschnitt des Datenbuses 1, eine Leistung, die derjenigen des Ausgangssignals entspricht. Somit erhöht sich die Reichweite von über das Datenübertragungssystem übertragenen Signalen. Entsprechend kann die Anzahl der in Reihe an den Datenbus 1 angeschlossenen Stationseinrichtungen 3 vergrößert werden. Eine Begrenzung ergibt sich dabei nur durch die innerhalb der Lichtwellenleiter bzw. an Anschlußstellen auftretenden geringen Leistungsverluste.

Die Pulslänge bzw. Pulsdauer 1 eines Impulses 31 eines zu übertragenden Signals kann dabei so vorgegeben werden, daß sie gegenüber den Schaltzeiten der Empfangs- und Sendeeinheiten 19,21 Verbindungsleitung 13 und den Anschlußleitungen 15,17 groß ist. Damit wird erreicht, daß die Rückführung eines verstärkten Signals bzw. die Überlagerung eines derartigen Signals, mit dem über die Durchgangsleitung 27 direkt übertragenen Anteil dieses Signals, zu keiner Veränderung bzw. Verfälschung des Informationsinhaltes des Signals führt.

Erfindungsgemäß können bedarfsweise Signale in jeder der Stationseinrichtungen 3 verstärkt und dem Datenbus 1 zurückgeführt werden. Bei mit einer Adresse versehenen Signalen erfolgt in jeder Stationseinrichtung 3 zunächst ein Vergleich hinsichtlich der Adressen. Es kann dann eine Verstärkung eines Signals nur in denjenigen Stationseinrichtungen erfolgen, deren Adresse nicht mit derjenigen des Signals übereinstimmt. Damit ergibt sich in einfacher Weise eine Verstärkung für ein Signal das über den Datenbus 1 weitergeleitet werden muß, damit es eine Stationseinrichtung erreicht deren Adresse mit derjenigen des Signals übereinstimmt.

**Patentansprüche**

1. Bidirektionales optisches Datenübertragungssystem für digitale optische Signale mit einem einen Lichtwellenleiter aufweisenden Datenbus (1) für in Reihe angeordnete Stationseinrichtungen (3), mit jeweils einer Empfangs- und einer Sendeeinheit (19,21), von denen jede über eine optische Verzweigung (5,7) mit dem Datenbus (1) verbunden ist, wobei jede Verzweigung (5,7) zwei Verzweigungsleitungen (9,11) aufweist, die an ihren dem Datenbus (1) entfernten Enden zu einer Verbindungsleitung (13) zusammengeführt sind, die an ihrem der Verzeigung (5,7) abgewandten Ende in jeweils eine Anschlußleitung (15,17) für die Empfangs- und die Sendeeinheit (19,21) aufgeteilt ist, und einer Durchgangsleitung (27) zur direkten Verbindung von sich jeweils an eine Verzweigung (5,7) anschließenden Abschnitten des Datenbuses (1), dadurch gekennzeichnet, daß in mindestens einer Stationseinrichtung (3) ein über die Empfangseinheit (19) empfangenes Signal über die Sendeeinheit (21) verstärkt und dem Datenbus (1) zurückgeführt wird.

2. Datenübertragungssystem nach Anspruch 1, dadurch gekennzeichnet, daß der Datenbus (1) und die Verbindungsleitung (13) im wesentlichen übereinstimmende Querschnittsflächen aufweisen, und/oder daß die Durchgangsleitung (27) die Verzweigungsleitungen (9,11) und die Anschlußleitungen (15,17) jeweils eine Querschnittsfläche haben, die im wesentlichen der Hälfte der Querschnittsfläche des Datenbuses (1) entspricht.

3. Datenübertragungssystem nach Anspruch 1 oder 2, dadurch gekennzeichnet, daß jeder Stationseinrichtung (3) eine Adresse zugeordnet ist, jedes Signal eine Adresse enthält, und daß in jeder Stationseinrichtung (3) diejenigen Signale mit einer von der Stationseinrichtung (3) abweichenden Adresse verstärkt werden.

4. Datenübertragungssystem nach einem der Ansprüche 1 bis 3, dadurch gekennzeichnet, daß die Pulslänge (1) der einzelnen Informationsabschnitte eines Signals gegenüber den Schaltzeiten der Empfangs- und Sendeeinheiten (19,21) und den Laufzeiten in der optischen Verzweigung (5,7), der Verbindungsleitung (13) und den Anschlußleitungen (15,17) groß ist, so daß durch die Rückführung verstärkter Signale im wesentlichen keine Veränderung des Informationsinhaltes des Signals auftritt.

# Fig.1

# Fig.2